# EUROPÄISCHE PATENTSCHRIFT

(11) **EP 1 979 219 B1**
(45) Veröffentlichungstag und Bekanntmachung des Hinweises auf die Patenterteilung: **17.11.2010**
(21) Anmeldenummer: 07711403.1
(22) Anmeldetag: 29.01.2007
(51) Int. Cl.: B62B 17/08, B62B 15/00

(54) **BOB**
BOBSLEIGH
BOBSLEIGH

(30) Priorität: 02.02.2006 AT 792006 U
(43) Veröffentlichungstag der Anmeldung: 15.10.2008
(73) Patentinhaber: Sulzenbacher, Peter, 6370 Kitzbühel (AT)
(72) Erfinder: Sulzenbacher, Peter, 6370 Kitzbühel (AT)
(74) Vertreter: Puchberger, Peter
(86) Internationale Anmeldenummer: PCT/EP2007/000732
(87) Internationale Veröffentlichungsnummer: WO 2007/088016

(56) Entgegenhaltungen:
- EP-A- 0 154 310
- DE-A1- 2 017 827
- DE-A1- 2 532 034
- FR-A1- 2 437 850
- US-A1- 2003 205 872
- US-A1- 2004 119 255
- US-A1- 2005 029 758

## Beschreibung

Die Erfindung betrifft einen Bob zur Abfahrt auf einer mit Schnee, Eis oder Gleitbelag bedeckten Piste gemäß dem Oberbegiff von Anspruch 1.

Ein derartiger Bob ist zB der DE 2 017 827 A zu entnehmen. Diese zeigt ein rodelähnliches Sportgerät, wobei der Bobkörper eine vertiefte Sitzfläche, eine Auflagefläche, eine Auflagefläche für die Oberschenkel, einen von der Oberseite des Bobs abstehenden Griff und an der Unterseite eine Gleitfläche mit Kufen aufweist. Ein solcher Bob ist ebenso wie andere ähnliche im Handel erhältliche Bobs dieser Art zum hobbymäßigen Rutschen auf Schnee geeignet. Diese bekannten Bobs können aber nicht die Anforderungen an ein Sportgerät erfüllen, wie sie für Wettbewerbe und auch für semi-professionelle Rennen erforderlich sind. Den bekannten Bobs fehlt es insbesondere an Aerodynamik und die Ausbildung der Lauffläche und die Möglichkeiten der Führung des Bobs im Gelände und die Steuermöglichkeiten sind mangelhaft.

Die vorliegende Erfindung hat somit zum Ziel, einen Bob für den sportlichen Einsatz bereitzustellen, der die genannten Nachteile vermeidet und auch noch weitere Vorteile bietet, wie nachstehend beschrieben ist.

Der erfindungsgemäße Bob ist gekennzeichnet durch die Merkmale gemäß dem kennzeichnenden Teil von Anspruch 1.

Weitere vorteilhafte Merkmale sind den Ansprüchen und der nachfolgenden Beschreibung mit den Zeichnungen zu entnehmen.

Die Erfindung wird beispielhaft anhand der Zeichnungen näher beschrieben. Fig. 1 zeigt eine Frontansicht und Fig. 2 eine Rückansicht des Bobs sowie die Fig. 3 eine Seitenansicht. Fig. 4 zeigt die Ansicht auf die Oberseite und Fig. 5 die Ansicht der Lauffläche an der Unterseite des Bobs. Fig. 6 zeigt die Vorderansicht eines erfindungsgemäßen Bobs in vier verschiedenen Funktionslagen an einem Schräghang. Fig. 7 ein Ausführungsvariante für den Heckbereich eines Bobs in Seitenansicht und Fig. 8 drei verschiedene Darstellungen des über einen Hang nach unten gleitenden Bobs beim Bremsmanöver.

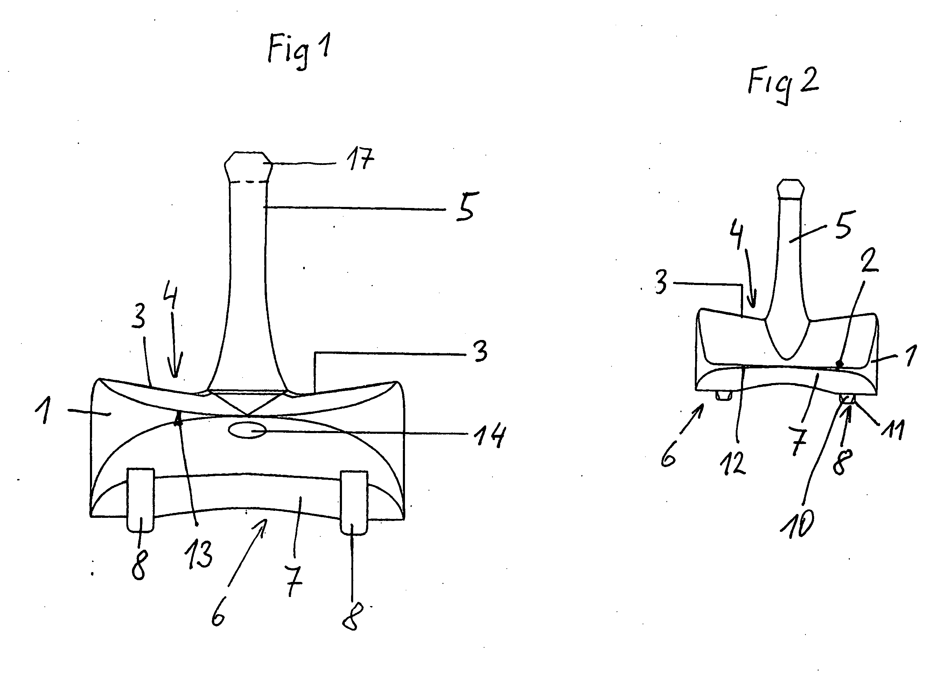

Die Fig. 1 zeigt die Vorderansicht und Fig. 2 die Rückansicht des Bobs. Der Bobkörper 1 weist eine Sitzfläche 2 und eine Auflagefläche 3 für die Oberschenkel des Bobfahrers auf. Von der Oberseite 4 des Bobs steht mittig ein Griff 5 ab. An der Unterseite 6 des Bobs befindet sich die Gleitfläche 7 mit den Kufen 8. Zur besseren Führung des Bobs sind entlang der Längsseiten 9 die Kufen 8 vorgesehen, wobei in Fig. 2 eine Ausführungsvariante eingezeichnet ist, bei der die Kufen 8 aus mit Rippen 10 der Gleitfläche 7 verbundenen Kufenaufsätzen 11 bestehen. In Fig. 2 und auch in Fig. 1 ist zu erkennen, dass die Gleitfläche 7 durchgehend leicht konkav ausgebildet ist. Zum Heck 12 hin ist eine Vertiefung vorgesehen. Diese Vertiefung verbreitert sich zum Heck hin.

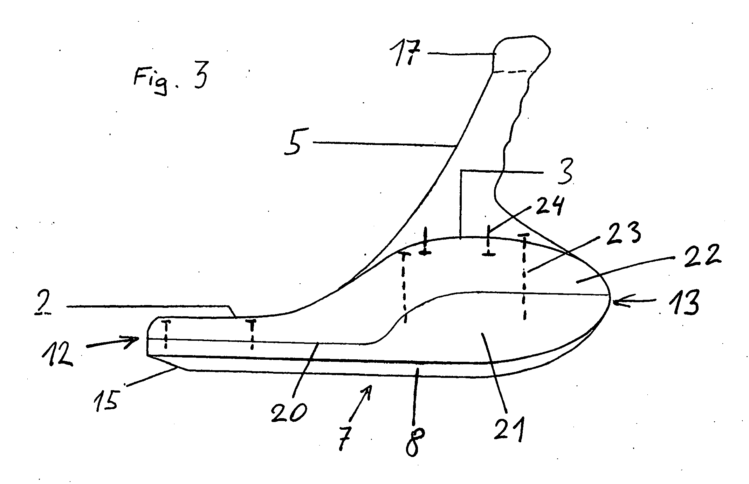

Von der Vorderseite her gesehen und wie in Fig. 1 dargestellt ist, und wie insbesondere auch in der Seitenansicht gemäß Fig. 3 zu erkennen ist, ist der Bobkörper 1 aerodynamisch günstig tropfenförmig ausgebildet und an der Oberseite fällt die obere Fläche von der Auflagefläche 3 zum Bug 13 hin ab. Die Kufen 8 sind bis in den Bugbereich hinaufgezogen. An der Spitze des Bugs 13 befindet sich ein hier nur angedeutetes Befestigungsmittel 14 wie zB ein Ring oder eine Öse oder einfach ein Loch im Bobkörper 1, an dem ein Tragegurt oder eine Ziehschnur befestigt werden kann. In gleicher Weise kann auch am Heck 12 ein ähnliches Befestigungsmittel vorgesehen sein.

Der Griff 5 endet nach oben hin in einem Knauf 17, der beispielsweise abnehmbar sein kann, um ihn individuell gestalten zu können.

In Fig. 3 ist zu sehen, dass die Kufen 8 zum Heck 12 hin und zur Gleitfläche hin mit einem Verlauf 15 ausgebildet sind. Die Funktion dieses Verlaufes wird später erläutert.

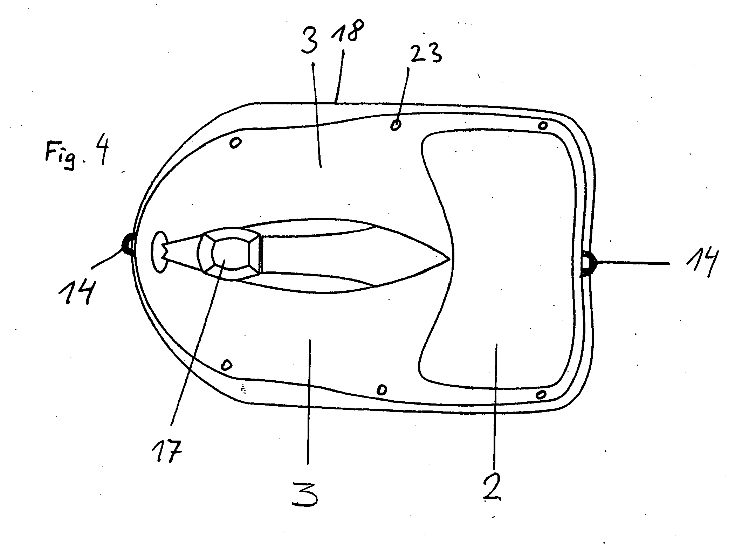

Die Ansicht der Oberseite des Bobkörpers ist in Fig. 4 dargestellt. Hier sind die Befestigungsmittel 14 als Ösen ausgebildet. Gemäß Erfindung ist das Heck 12 im

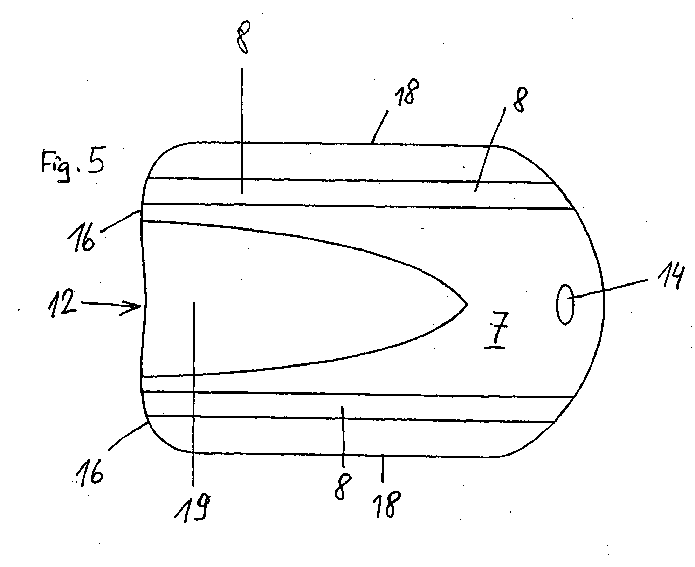

Wesentlichen gerade ausgeführt, sodass eine Bremskante 27 gebildet ist, wodurch beim Bremsen der Bob stabil gehalten werden kann. Zur Seite des Bobs hin zeigt die Bremskante 27 je eine Abrundung 16. Die Fig. 5 zeigt, dass sich die Kufen 8 in den Bereich dieser Abrundung 16 hinein erstrecken. Zufolge dieser Ausbildung des Hecks ist es möglich auch während des Bremsens mit der Bremskante den Bob in eine Kurve hineinzulenken oder während der Kurvenfahrt zu bremsen.

Die umlaufende Kante 18 der Gleitfläche 7 ist ähnlich wie bei einem Ski oder Snowboard, ein Instrument zur Führung des Bobs, insbesondere in Schrägfahrt am Hang oder beim Kurvenfahren und kann bevorzugterweise gehärtet sein und insbesondere auch eine Stahlkante aufweisen. Die Gleitfläche 7 zeigt in Fig. 5 die Vertiefung 19, die sich vom vorderen Drittel des Bobs bis zum Heck 12 erstreckt. Die Seitenansicht der Fig. 3 zeigt, dass die Kante 18 des Bobs wie die Kante eines Skis ausgebildet ist, also entlang der Längsseiten gerade und zum Bug 13 nach oben gezogen. Ein leichter Kurvenschwung nach oben und auch eine Taillierung beider Kanten in Aufsicht kann vorteilhaft sein. Die Taillierung kann einen Effekt wie bei einem Carving-Ski bewirken.

Aus den Darstellungen, zB der Fig. 2 und 3 ist gut erkennbar, dass die Form des Bobs sehr windschlüpfrig ist und dennoch eine bequeme Sitz- und Lagerposition des Gesäßes und der Oberschenkel erlaubt. Dies erleichtert die Steuermöglichkeiten und ist komfortabler bei längeren Abfahrten.

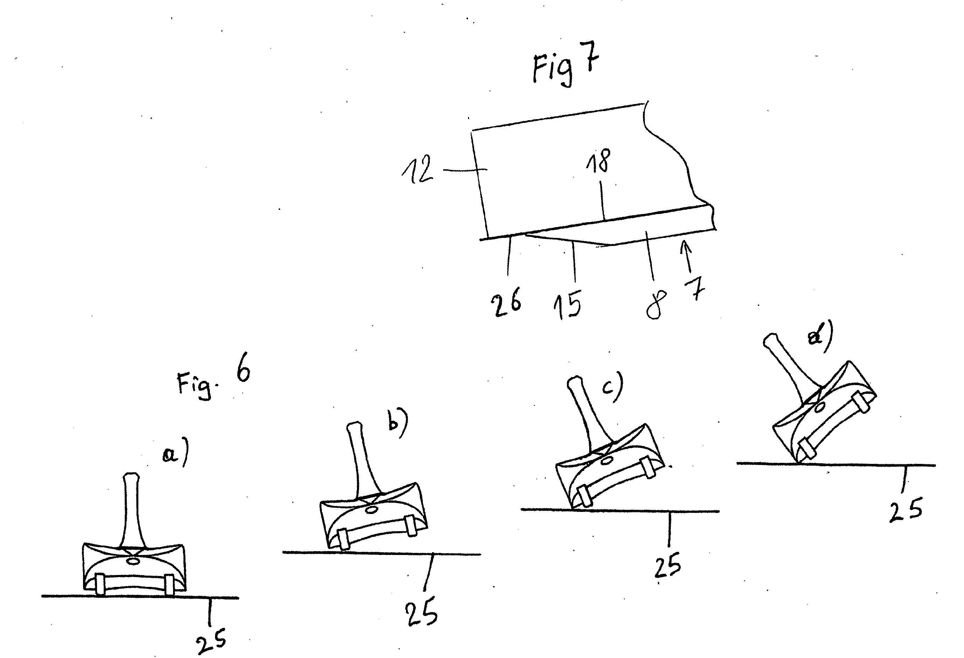

Die Kufen 8 oder deren Aufsätze 11 können auswechselbar schärfere oder weichere Kanten aufweisen, um den Bob den Schneebedingungen anpassen zu können. Bevorzugt sind die Kufenhöhe und der Abstand zur Kante gemäß Fig. 1 so bemessen, dass die Verbindungslinie 28 der Kanten etwa einen Winkel a von 25° bis 35° zur Ebene der Gleitfläche 7 einnimmt. Dies bewirkt, dass bei Kurvenfahrt bei entsprechender Schrägstellung des Bobs sowohl die Kufe als auch die Kante 18 in den Hang schneidet und bei noch stärkerer Neigung nur mehr die Kante 18. Siehe dazu die Fig. 6c) und d).

Wie den Fig. 1 und 2 zu entnehmen ist, sind die Auflageflächen für die Oberschenkel von der vertieften Sitzfläche 2 stufenlos in den gewölbten Bereich übergehend ausgebildet und die Auflageflächen 3 sind zum mittig angeordneten Griff 5 hin abgesenkt. Diese Absenkung fördert den Halt der Oberschenkel und damit die Steuerbarkeit des Bobs. Der Griff ist mit kurvigem Verlauf aus der Sitzfläche 2 heraus ausgebildet, um Verletzungen zu vermeiden. Zur besseren Führung des Bobs ist eine Druckfläche 29 vorgesehen, die sich vom Griff in Richtung zum Bug erstreckt. Dies verbessert die Übertragung des Schenkeldrucks auf den Bob.

Der Bobkörper besteht in bevorzugterweise aus einer oder mehreren Kunststoffschalen, die miteinander verklebt oder verschraubt werden. Gegebenenfalls können diese Kunststoffschalen auch ausgeschäumt sein. Um den Bob an die verschiedenen Bedingungen anpassen zu können, ist es auch möglich, den Bob aus mehreren Teilen vorzusehen, die zusammengeschraubt werden können. In Fig. 3 ist zu dieser Ausführungsvariante die Trennfuge 20 eingezeichnet, die um den gesamten Bob herumläuft und den Bobkörper in einen Bodenkörper 21 und das Oberteil 22 teilt. Damit ist es möglich, je nach Pistenbedingungen die geeignete Gleitfläche 7 mit den ebenfalls geeigneten Kufen 8 vorzugehen. Strichliiert sind Schrauben 23 vorgesehen, die der Befestigung des Oberteiles 22 mit dem Bodenkörper 21 dienen.

In ähnlicher Weise kann auch der Griff 5 abnehmbar sein, um auch ihn individuell anpassen zu können. Diesbezügliche Schrauben zur Befestigung sind mit dem Bezugszeichen 24 bezeichnet. In Fig. 4 sind die Schraubenköpfe der Schrauben 23 zu erkennen, deren Lage selbstverständlich den Kräfteverteilungen angepasst werden muss.

Zur Kante 18 der Gleitfläche 7 sei noch gesagt, dass bevorzugt die Kante entlang der Längsseiten gehärtet ausgebildet sind und insbesondere auch aus Stahl bestehen können. Weiters ist es vorteilhaft, auch die Kante entlang des Hecks 12 gehärtet oder mit Stahlkante auszubilden. Die gehärtete Kante oder Stahlkante kann aber auch entlang des gesamten Randes der Gleitfläche 7 vorgesehen sein, sodass die gehärtete Kante rundum läuft.

In Fig. 7 ist eine Ausführungsvariante des Hecks 12 mit den Kufen 8 dargestellt. Der schräge Verlauf 15 der Kufen 8 endet in der Gleitfläche 7 in einem Bremsflächenstreifen 26, durch den die Bremsfähigkeit des Bobs beim Anstellen des Bobkörpers gegenüber der Schneefläche verbessert werden kann. Zusätzlich ist in Fig. 7 auch noch die gehärtete Stahlkante 18 eingezeichnet, die in das Material des Bobkörpers oder des Bodenkörpers 21 oder der Gleitfläche 7 einlaminiert sein kann und über das Heck 12 und deren Vorsprünge 16 überstehen kann, um den Griff der Kante noch zu verbessern.

Fig. 6 zeigt den erfindungsgemäßen Bob in Vorderansicht in verschiedenen Schräglagen. In der Darstellung 6a) erfolgt eine Schrägfahrt am Hang 25 bei gleichmäßiger Belastung beider Kufen. In der Darstellung b) wird die bergseitige Kufe stärker eingesetzt und die talseitige Kufe vom Boden abgehoben bis gemäß c) zum Einleiten einer schärferen Kurve die Kante 18 der Gleitfläche 7 mit der Schneefläche in Eingriff kommt, wie dies in d) noch stärker ausgebildet ist. Damit kann eine enge Kurve bergauf durchgeführt werden.

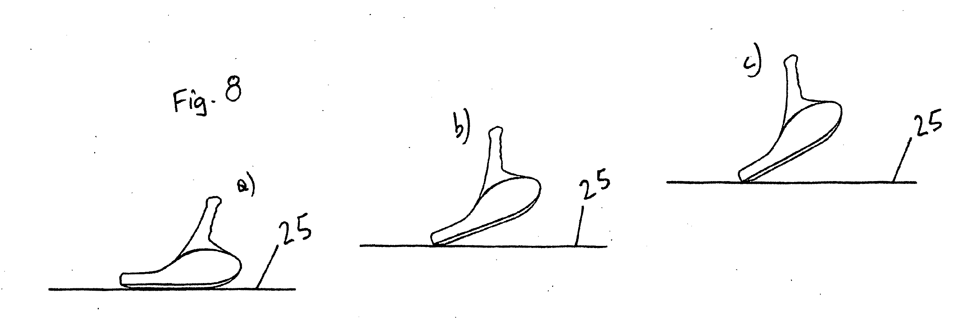

Die Fig. 8 zeigt in drei Stellungen das Abbremsen des Bobs, wobei in a) der Bob auf seiner gesamten Gleitfläche ungebremst abwärts fährt. In b) wird das Bremsen eingeleitet oder in schwacher Form durchgeführt, wobei der Vertauf f5 der Kufen 8 zulässt, dass die Kante der Gleitfläche 7 am Heck eine Bremswirkung entfaltet. Bei stärkerer Anstellung gemäß c) wird die Bremswirkung stark verstärkt. Es ist klar verständlich, dass bei Ausbildung des Hecks gemäß Fig. 7 mit der Anordnung des Bremsflächenstreifens 26 die Bremswirkung schon bei leichterem Anstellen des Bobs und wesentlich aggressiver durchgeführt werden kann.

## Patentansprüche

1. Bob zur Abfahrt auf einer mit Schnee, Eis oder Gleitbelag bedeckten Piste, der einen Bobkörper mit einer vertieften Sitzfläche (2), Auflageflächen (3) für die Oberschenkel, einen von der Oberseite (4) des Bobs abstehenden und zwischen den Auflageflächen angeordneten Griff (5) sowie an der Unterseite eine Gleitfläche (7) mit Kufen (8) aufweist, und sich die Kufen (8) in Längsrichtung des Bobs zum Heck hin erstrecken und die Gleitfläche (7) zwischen den Kufen eine sich zum Heck verbreiternde Vertiefung (19) aufweist oder flach ausgebildet ist, **dadurch gekennzeichnet, dass** das Heck (12) des Bobs eine sich über den größeren Teil der Bobbreite erstreckende Bremskante (27) aufweist, die an den Ecken zur Seite des Bobs eine Abrundung (16) aufweist und dass der Rand der Gleitfläche (7) mit einer Kante (18) ausgebildet ist und die Kante (18) entlang der Längsseiten (9) im Wesentlichen gerade ausgebildet und zum Bug (13) nach oben gezogen ist.

2. Bob nach Anspruch 1, **dadurch gekennzeichnet, dass** sich die Kufen (8) in den Bereich der Abrundung (16) der Bremskante (27) erstrecken.

3. Bob nach Anspruch 1 oder 2, **dadurch gekennzeichnet, dass** die Kufen (8) zum Heck (12) des Bobs zur Gleitfläche (7) hin mit einem Verlauf (15) ausgebildet sind.

4. Bob nach Anspruch 3, **dadurch gekennzeichnet, dass** der Verlauf (15) gerade ist.

5. Bob nach einem der Ansprüche 1 bis 4, **dadurch gekennzeichnet, dass** der Rand zumindest entlang der Längsseiten (9) des Bobs mit einer gehärteten Kante (18), bevorzugt einer Stahlkante versehen ist.

6. Bob nach Anspruch 5, **dadurch gekennzeichnet, dass** die gehärtete Kante (18) am Heck (12) und an den Längsseiten (9) des Bobs vorgesehen ist, bevorzugt den Bob umfasst.

7. Bob nach einem der Ansprüche 1 bis 6, **dadurch gekennzeichnet, dass** der Verlauf der Kufen (8) vor dem Rand am Heck des Bobs unter Ausbildung eines Bremsflächenstreifens (26) endet.

8. Bob nach einem der Ansprüche 1 bis 7, **dadurch gekennzeichnet, dass** die Auflagefläche (3) für die Oberschenkel von der vertieften Sitzfläche (2) stufenlos in einen gewölbten Bereich übergehend ausgebildet ist und dass die Auflagefläche zum mittig angeordneten Griff (5) hin abgesenkt ist.

9. Bob nach einem der Ansprüche 1 bis 8, **dadurch gekennzeichnet, dass** die Gleitfläche (7) im vorderen Abschnitt des Bobs zum Bug (13) hin flach ausgebildet ist und nach hinten zum Heck (12) die Vertiefung vorgesehen ist.

10. Bob nach einem der Ansprüche 1 bis 9, **dadurch gekennzeichnet, dass** die Kufen (8) durch scharfkantige Kufenaufsätze (11) gebildet sind, die auf Rippen (10) der Gleitfläche (7) befestigt sind.

11. Bob nach einem der Ansprüche 1 bis 10, **dadurch gekennzeichnet, dass** der Bobkörper aus einer oder mehreren Kunststoffschalen gebildet und gegebenenfalls ausgeschäumt ist.

12. Bob nach einem der Ansprüche 1 bis 11, **dadurch gekennzeichnet, dass** am Bug und/oder Heck Befestigungsmittel (14) für einen Tragegurt oder eine Zugleine angeordnet sind.

13. Bob nach einem der Ansprüche 1 bis 12, **dadurch gekennzeichnet, dass** der Bob mehrteilig ist, wobei ein Bodenkörper (21) mit der Gleitfläche (7) mit dem Oberteil (22) verbindbar ist.

14. Bob nach Anspruch 13, **dadurch gekennzeichnet, dass** der Griff (5) vom Bobkörper lösbar vorgesehen ist.

15. Bob nach Anspruch 14, **dadurch gekennzeichnet, dass** ein Knauf (17) vom Griff (5) abnehmbar ist.

16. Bob nach einem der Ansprüche 1 bis 15, **dadurch gekennzeichnet, dass** der Griff (5) mit kurvigem Verlauf aus der Sitzfläche (2) heraus ausgebildet ist.

17. Bob nach einem der Ansprüche 1 bis 16, **dadurch gekennzeichnet, dass** sich vom Griff (5) in Richtung zum Bug (13) hin eine Druckfläche (29) erstreckt.

18. Bob nach einem der Ansprüche 1 bis 17, **dadurch gekennzeichnet, dass** die Höhe der Kufen (8) und deren Abstand von der Kante (18) des Bobs derart bemessen sind, dass die Verbindungslinie (28) zwischen der Kante der Kufen (8) und der Kante (18) des Bobs einen Winkel zwischen 25° und 35°, bevorzugt etwa 30°, zur Ebene der Gleitfläche (7) einnimmt.

## Claims

1. Bobsleigh for travelling down a piste which is covered with snow, ice or a sliding covering, which bobsleigh has a bobsleigh body having a recessed seating surface (2), support surfaces (3) for the thighs, a handle (5) which protrudes from the upper side (4) of the bobsleigh and which is arranged between the support surfaces, and a sliding surface (7) having runners (8) at the lower side, and the runners (8) extend in the longitudinal direction of the bobsleigh towards the rear and the sliding surface (7) has, between the runners, a recess (19) which widens towards the rear or is constructed so as to be planar, **characterised in that** the rear (12) of the bobsleigh has a braking edge (27) which extends over the majority of the width of the bobsleigh and which has a rounded portion (16) at the corners relative to the side of the bobsleigh, and **in that** the rim of the sliding surface (7) is constructed with an edge (18) and the edge (18) is constructed so as to be substantially straight along the longitudinal sides (9) and is drawn upwards relative to the front (13).

2. Bobsleigh according to claim 1, **characterised in that** the runners (8) extend into the region of the rounded portion (16) of the braking edge (27).

3. Bobsleigh according to claim 1 or claim 2, **characterised in that** the runners (8) are constructed so as to have an inclined portion (15) towards the rear (12) of the bobsleigh with respect to the sliding surface (7).

4. Bobsleigh according to claim 3, **characterised in that** the inclined portion (15) is straight.

5. Bobsleigh according to any one of claims 1 to 4, **characterised in that** the rim, at least along the longitudinal sides (9) of the bobsleigh, is provided with a hardened edge (18), preferably a steel edge.

6. Bobsleigh according to claim 5, **characterised in that** the hardened edge (18) is provided at the rear (12) and at the longitudinal sides (9) of the bobsleigh, and preferably extends round the bobsleigh.

7. Bobsleigh according to any one of claims 1 to 6, **characterised in that** the inclined portion of the runners (8) terminates before the rim at the rear of the bobsleigh, with a braking surface strip (26) being formed.

8. Bobsleigh according to any one of claims 1 to 7, **characterised in that** the support surface (3) for the thighs is constructed so as to extend from the recessed seating surface (2) in a stepless manner into a curved region and **in that** the support surface is lowered towards the centrally arranged handle (5).

9. Bobsleigh according to any one of claims 1 to 8, **characterised in that** the sliding surface (7) in the front portion of the bobsleigh is constructed so as to be planar towards the front (13) and the recess is provided towards the back relative to the rear (12).

10. Bobsleigh according to any one of claims 1 to 9, **characterised in that** the runners (8) are formed by sharpedged runner extensions (11) which are secured to ribs (10) of the sliding surface (7).

11. Bobsleigh according to any one of claims 1 to 10, **characterised in that** the bobsleigh body is formed by one or more plastics material shells and is optionally foam filled.

12. Bobsleigh according to any one of claims 1 to 11, **characterised in that** at the front and/or rear there are arranged securing means (14) for a carrying strap or a pull cord.

13. Bobsleigh according to any one of claims 1 to 12, **characterised in that** the bobsleigh is in several parts, a base member (21) having the sliding surface (7) being able to be connected to the upper portion (22).

14. Bobsleigh according to claim 13, **characterised in that** the handle (5) is provided so as to be able to be released from the bobsleigh body.

15. Bobsleigh according to claim 14, **characterised in that** a knob (17) can be removed from the handle (5).

16. Bobsleigh according to any one of claims 1 to 15, **characterised in that** the handle (5) is constructed so as to have a curved inclined portion from the seating surface (2).

17. Bobsleigh according to any one of claims 1 to 16, **characterised in that** a pressure surface (29) extends from the handle (5) in the direction towards the front (13).

18. Bobsleigh according to any one of claims 1 to 17, **characterised in that** the height of the runners (8) and the spacing thereof from the edge (18) of the bobsleigh are of such a size that the connection line (28) between the edge of the runners (8) and the edge (18) of the bobsleigh forms an angle of between 25° and 35°, preferably substantially 30°, relative to the plane of the sliding surface (7).

## Revendications

1. Bobsleigh pour descendre sur une piste recouverte de neige, de glace ou d'un revêtement glissant, qui comporte un corps de bobsleigh ayant une surface (2) en creux formant siège, des surfaces (3) d'appui pour la branche supérieure, un manche (5) faisant saillie du côté (4) supérieur entre les surfaces c'appui, ainsi que, du côté inférieur, une surface (7) de glissement ayant des patins (8) et les patins (8) s'étendent dans la direction longitudinale du bobsleigh vers l'arrière et la surface (7) de glissement a entre les patins une cavité (19) s'élargissant vers l'arrière ou est plane, **caractérisé en ce que** l'arrière (12) du bobsleigh comporte une arête (27) de freinage, qui s'étend sur la plus grande partie de la largeur du bobsleigh et qui a un arrondi (16) aux coins vers le côté du bobsleigh et **en ce que** le bord de la surface (7) de glissement est constitué sous la forme d'une arête (18) et l'arête (18) est sensiblement rectiligne le long des côtés (9) longitudinaux et remonte vers l'avant (13).

2. Bobsleigh suivant la revendication 1, **caractérisé en ce que** les patina (6) s'étendent dans la partie de l'arrondi (16) de l'arête (27) de freinage.

3. Bobsleigh suivant la revendication 1 ou 2, **caractérisé en ce que** les patins (8) sont constitués en ayant un tracé (15) de l'arrière (12) du bobsleigh à la surface (7) de glissement.

4. Bobsleigh suivant la revendication 3, **caractérisé en ce que** le tracé (15) est rectiligne.

5. Bobsleigh suivant l'une des revendications 1 à 4, **caractérisé en ce que** le bord, au moins le long des côtés (9) longitudinaux du bobsleigh, est doté d'une arête (18) durcie, de préférence d'une arête en acier.

6. Bobsleigh suivant la revendication 5, **caractérisé en ce que** l'arête (18) en acier est prévue à l'arrière (12) et sur les côtés (9) longitudinaux du bobsleigh, en entourant de préférence le bobsleigh.

7. Bobsleigh suivant l'une des revendications 1 à 6, **caractérisé en ce que** le tracé des patins (8) se termine avant le bord à l'arrière du bobsleigh en formant une bande (26) de surface de freinage.

8. Bobsleigh suivant l'une des revendications 1 à 7, **caractérisé en ce que** la surface d'appui (3) pour la branche supérieure se transforme sans palier de la surface (2) formant siège en une partie courbée et **en ce que** la surface d'appui est abaissée en direction du manche (5) disposé au milieu.

9. Bobsleigh suivant l'une des revendications 1 à 8, **caractérisé en ce que** la surface (7) de glissement est constituée plate dans le segment avant du bobsleigh en direction de l'avant (13) et la cavité est prévue vers l'arrière en direction de l'arrière (12).

10. Bobsleigh suivant l'une des revendications 1 à 9, **caractérisé en ce que** les patins (8) sont formés par des jeux (11) de patins à arête vive, qui sont fixés sur des nervures (10) de la surface (7) de glissement.

11. Bobsleigh suivant l'une des revendications 1 à 10, **caractérisé en ce que** le corps du bobsleigh est formé d'une coquille en matière plastique ou de plusieurs coquilles en matière plastique et, le cas échéant, sous forme de mousse.

12. Bobsleigh suivant l'une des revendications 1 à 11, **caractérisé en ce que** des moyens (14) de fixation d'une sangle de portée ou d'une corde de traction sont disposés à l'avant et/ou à l'arrière.

13. Bobsleigh suivant l'une des revendications 1 à 12, **caractérisé en ce que** le bobsleigh est en plusieurs parties, dont un corps (21) de fond ayant la surface (7) de glissement peut être assemblé à la partie (22) supérieure.

14. Bobsleigh suivant la revendication 13, **caractérisé en ce que** le manche (15) est prévu amovible du corps du bobsleigh.

15. Bobsleigh suivant la revendication 14, **caractérisé en ce qu'**un bouton (17) peut être retiré du manche (5).

16. Bobsleigh suivant l'une des revendications 1 à 15, **caractérisé en ce que** le manche (5) sort de la surface (2) formant siège suivant un tracé en courbe.

17. Bobsleigh suivant l'une des revendications 1 à 16, **caractérisé en ce qu'**une surface (29) de pression va du manche (5) en direction de l'avant (13).

18. Bobsleigh suivant l'une des revendications 1 à 17, **caractérisé en ce que** la hauteur des patins (8) et leur distance à l'arête (18) du bobsleigh sont telles que la ligne (28) de liaison entre l'arête des patins (8) et l'arête (18) du bobsleigh fait un angle compris entre 25° et 35°, en étant égale de préférence à environ 30°, avec le plan de la surface (7) de glissement.
